# EUROPEAN PATENT SPECIFICATION

(11) **EP 2 375 815 B1**
(45) Date of publication and mention of the grant of the patent: **24.07.2013**
(21) Application number: 10305327.8
(22) Date of filing: 30.03.2010
(51) Int. Cl.: H04W 36/02, H04W 84/04

(54) **Handover in a home network where data is buffered in a routing module**
Übergabe in einem privaten Netzwerk in dem Daten in einem Routingknoten gepuffert werden
Transfert dans un réseau privé où les données sont mises dans une mémoire tampon d'un module de routage

(43) Date of publication of application: 12.10.2011
(73) Proprietor: Mitsubishi Electric R&D Centre Europe B.V., 1119 NS Schiphol Rijk Amsterdam (NL); Mitsubishi Electric Corporation, Chiyoda-ku Tokyo 100-8310 (JP)
(72) Inventor: Rollet, Romain, 35590, L'HERMITAGE - FRANCE (FR)
(74) Representative: Cabinet Plasseraud

(56) References cited:
- WO-A1-2009/019789
- WO-A1-2009/022860
- WO-A1-2009/033400
- LG ELECTRONICS: "Extension to Variant 1 of Solution 1 addressing inter-H(e)NB mobility" 3GPP DRAFT; S2-100405_LIPA_SOL1_MOBILITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Shenzhen; 20100118, 12 January 2010 (2010-01-12), XP050432961 [retrieved on 2010-01-12]
- QUALCOMM INCORPORATED ET AL: "Further analysis for LIPA/SIPTO solution for H(e)NB using a local PDN connection in Solution 1" 2 March 2010 (2010-03-02), 3GPP DRAFT; S2-101737, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , XP050434216 [retrieved on 2010-03-02] * figure 4 *
- LG ELECTRONICS: "Inter-H(e)NB Mobility with for LIPA Solution 1 Variant 1 with collocated H(e)NB and L-GW" 3GPP DRAFT; S2-102493_LIPA_SOL1_VAR1_MOBILITY (WORD 2003), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Kyoto; 20100510, 4 May 2010 (2010-05-04), XP050434639 [retrieved on 2010-05-04]

## Description

### 1. Technical Field

The present invention relates generally to a method, a routing module and a mobile network and, more particularly, to the management of handover.

### 2. Related Art

LTE (for 'Long Term Evolution') architecture defines a mobile network architecture (3GPP for 'Third Generation Partnership Project', Release 9).

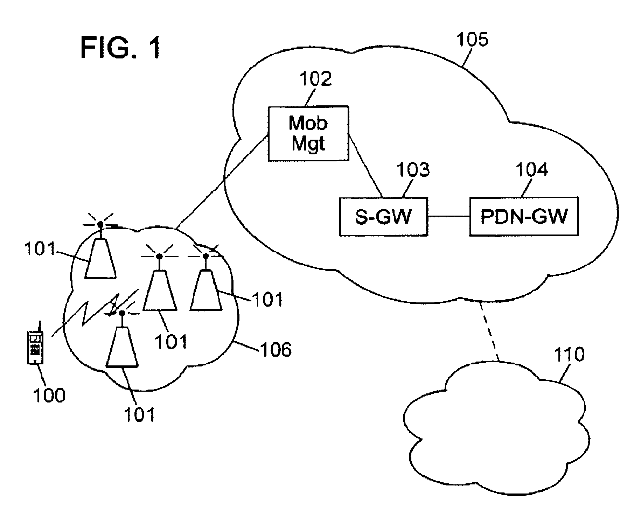

Figure 1 illustrates a network according to this type of architecture. In this network, a control plane and a data plane are handled separately. It comprises a core network part 105 and a home network part, or HAN (for 'Home Area Network') 106. The core network 105 includes a Mobility Management Entity 102 (MME), a Serving Gateway 103 (S-GW) and a Packet Data Network Gateway 104 (PDN-GW). The PDN-GW 104 can be linked to an internet network 110.

The home network 106 can include a plurality of home NodeBs 101, having respective coverage areas. In these conditions, when a terminal 100 (or 'UE' for User Equipment) goes from the coverage area of one home NodeB to the coverage area of another one, a handover is handled. Before the handover, and at the beginning of the handover, the UE is handled firstly by a source home Node B and at the end of the handover it is handled by a target home NodeB. During a transition time period, after triggering handover and before establishing a radio link between the UE and the target home Node B, the source home Node B should buffer packets received from the Core Network and from the UE in order to be able to transmit them to the target home NodeB.

On downlink, the source home NodeB should store the following packets:
- in a Acknowledged Mode:
   o packets received from the core network before the beginning of the handover but unacknowledged packets (meaning packets not yet sent to the terminal before the beginning of the handover and packets already sent to the terminal but not yet acknowledged); and
   o fresh packets (meaning packets received from the core network after the beginning of the handover);
- in a Unacknowledged Mode:
   o packets received from the core network before the beginning of the handover but not sent to the terminal before the beginning of the handover; and
   o fresh packets (meaning packets received from the core network after the beginning of the handover);

On uplink, the source home NodeB should store the following packets:
- in a Acknowledged Mode:
   o packets which are out of sequence; and
   o packets received from the terminal but not transmitted to the core network before the beginning of the handover.

Moreover, generally, the packets received at the source home NodeB from the core network are encrypted to be transmitted on the radio link. This encryption is carried out at the home NodeB level, based on a key which is specific to the home NodeB. An encryption performed by another home NodeB will not be based on the same key. In these conditions, the source home NodeB should be expected to buffer some packets received from the core network in an encrypted format, to retransmit them to the terminal in an encrypted format in case of bad transmission. The source home NodeB should be expected to store some packets in a clear format to be able to transmit them to the target home NodeB in case of an eventual home NodeB and. Indeed, the source home NodeB should be able to transmit to the target home NodeB the buffered packets in a clear format to make the target home NodeB able to encrypt them, with its encryption key, in order to send them to the terminal.

The document "Extension to Variant 1 of Solution 1 addressing inter-H(e)NB mobility"of LG Electronics 3GPP draft, 52-100405, 12 January 2010 discloses a system maintaining a continuity of service while a User Equipment UE moves from a source home NodeB to a target home NodeB in an enterprise IP network.

The document WO 2009/022860 discloses a method for performing a handover by a user equipment UE from a serving base station (Serving BS) to a target BS adapted to avoid retransmission of downlink and uplink data.

The document "Further analysis for LIPA/SIPTO solution for H(e)NB using a local PDN connection in solution 1" of Qualcomm incorporated and al. 3GPP draft, 52-101737, 2 March 2010 discloses functionality to manage a connexion between a Local GateWay and a home NodeB.

The document WO2009/033400 discloses a method for indicating data retransmission during area switching of a User Equipment UE, which enables avoiding retransmission of useless data.

The document WO2009/019789 discloses a mobile communication system comprising a User Equipment UE, a GateWay GW of a core network system and a plurality of base stations NodeB, each NodeB being adapted to communication with the GateWay.

It is important to note that in these conditions, it can be very difficult to provision a relevant memory size for all home NodeBs in a static way.

All these storage constraints imply to provide a large memory area on each home NodeB.

### SUMMARY OF THE INVENTION

The present invention relates to a method, a routing module and a mobile network as set forth in independent claims 1, 5 and 9.

Further embodiments are set forth in dependent claims.

According to an example, a mobile network comprises a terminal which can be handled by a plurality of home NodeBs in a home network depending on its location. All of the home NodeBs included in a home network can communicate with a core network part through a routing module. In other words, the routing module is a point of contact between all home NodeBs of the home network and the core network.

The terms 'routing module' correspond to any network entity located between the home network and the core network able to perform data packet routing according to an example. This entity can be located at a Home NodeB of the home network for instance or anywhere after the home NodeB and before the core network.

The terminal can be handled by the home NodeB when it is located in its coverage area. The home NodeB which handles a terminal is referenced as a source home NodeB. When the location of terminal is changed, it can be decided that another home NodeB is more adapted to handle it. In order to guarantee the continuity of a service offered to the terminal during its location change, the mobile network manages a handover. No limitation is attached to the event triggering a handover, neither to the network entity which takes the handover decision.

For instance, a handover decision can be taken by the source home NodeB, based on a level of quality of service on a radio link between the source home NodeB and the terminal.

Whatever the handover triggering entity, according to an example, the routing module is informed about the fact that the target home NodeB agrees to accept handling the terminal, previously handled by a source home NodeB. At this step, the routing module is in charge of storing in memory packets received from the core network and packets received from the source home NodeB. For that purpose, the routing module creates a forwarding link from the source home NodeB to make the source home NodeB able to send some packets. More precisely, these sent packets correspond to the packets expected to be transmitted by the source home NodeB to the terminal but not yet completely transmitted. The terms 'not yet completely transmitted' mean that the source home NodeB received them but either it did not yet transmitted them or it was not sure that the terminal received them correctly.

For instance, if the transmission is an acknowledged transmission (meaning that a packet is considered as being correctly if an acknowledgement is received for that) and if the source home NodeB did not yet received acknowledgments for some packets, it can send these unacknowledged packets to the routing module when the forwarding link is created, according to an example.

Thanks to these characteristics, the routing module is able to buffer temporally some packets during a transition period time between the triggering of handover and the end of handover, meaning when a radio link is correctly established between the target home NodeB and the terminal. Consequently, the source home NodeB can store fewer packets than in a mobile network according to prior art. The design of a home NodeB can be simplified, and then the cost of a home NodeB can be reduced.

For instance, as soon as it is informed about a handover, the routing module stops to transmit packets received from the core network to the source home NodeB. As soon as possible, it begins to buffer them until the target home NodeB will be able to transmit them to the terminal, eventually in an encrypted format. Then, the source home NodeB is no more expected to store the fresh packets, because they are no more received at the source home NodeB.

Moreover, when the transmission is done according to an acknowledged mode, it is important to maintain the order of packets in transmission even in case of handover. When a handover occurs, target home NodeB could receive some packets transmitted by the source home NodeB later than packets which are directly sent by the core network to the target home NodeB, although the packets sent directly from the core network could be transmitted to the terminal after those received from the source home NodeB. According to the prior art, the target home NodeB is in charge of re-ordering the received packets in order to make a transmission of packets in a correct order according to packet sequence numbers.

This functionality can be complex. Thanks to the characteristics of the present invention, it is easy to carry out such a re-ordering function at the routing module. Consequently, it is possible to reduce the cost of a home NodeB according to one embodiment of the present invention.

In an example, on uplink, the source home NodeB is able to transmit the out of sequence packets to the routing module thanks to the establishment of the forwarding link. Consequently, the source home NodeB is no more expected to store this kind of packets.

According to these characteristics, it is advantageously possible to provide home NodeBs which are less expensive because some functionalities are introduced at the routing module level. It is very relevant to provide such a routing module per home network in order to be able to have a plurality of home NodeBs less expensive.

Such a mechanism can be easily implemented in any type of network device. A routing module can be either a specific equipment inside the home network, or it can be collocated with one home NodeB inside the home network. It is in charge of concentrating a function of packets buffers for one home network. This concentration allows mutualising a usage of memory and a triggering of storage and of de-storage during a handover. In these conditions, it is possible to provision easily at the routing module level a memory size which is as adapted to the home network.

Such a routing module could allow providing a better QoS during hand-over. Indeed, such characteristics allow reducing the number of data flows exchanged between the source home NodeB and the target home NodeB.

Moreover, in case of encryption, this concentration inside the routing module allows removing the needs of decryption/re-encryption processes. That would improve the latency and reduce jitter during hand-over, and so improve the QoS especially for services with high QoS constraints, like voice service. It can be particularly relevant in a home network with multiple home NodeBs with small respective coverage areas. In this kind of topology, a larger number of hand-over can be occured, so it is important to maintain the QoS even during hand-over.

Implementation of this mechanism in the routing module makes possible to have home NodeBs less expensive, which is particularly interesting for a large deployment of home NodeBs in a single home network.

In an example, packets directed to the core network and received on the forwarding link are forwarded to the core network without being stored in memory.

Such a case can be advantageously carried out when the transmission is not in an acknowledged mode. In these conditions, it is not required to handle a synchronisation between different receptions of packets directed to the core network.

In an example, packets directed to the core network and received on the forwarding link are stored in memory, the method further comprising the following steps, after the radio link is established between the terminal and the target home NodeB:
- receiving packets sent by the terminal directed to the core network through the target home NodeB;
- re-ordering packets directed to the core network and received on the forwarding link and packets sent by the terminal directed to the core network through the target home NodeB; and
- sending to the core network re-ordered packets.

In these conditions, a synchronisation can be performed on uplink for transmission towards the core network. These characteristics can be advantageously carried out in case of acknowledged mode of transmission on uplink.

The method can further comprise the following steps after the radio link is established between the terminal and the target home NodeB:
- re-ordering packets received on the forwarding link directed to the terminal and packets received from the core network;
- sending to the terminal re-ordered packets.

In these conditions, a synchronisation can be performed on downlink for transmission towards the terminal. These characteristics can be advantageously carried out in case of acknowledged mode of transmission on downlink.

The method can further comprise the following steps after the radio link is established between the terminal and the target home NodeB:
- creating a temporary downlink;
- transmitting to the terminal packets received from the core network directed to the terminal;
- receiving a message indicating a handover complete; and
- releasing said temporary downlink.

Advantageously, a temporary link is created in order to transmit buffered packets at the routing module level, just after a radio link is established with the terminal but before the handover is complete at the network level. The handover can be considered as complete when a link is established between the core network and the terminal through the target home NodeB. The temporary link between the routing module and the target home NodeB can then be released.

### BRIEF DESCRIPTION OF THE DRAWINGS

Further features and advantages of the present invention will become more apparent from the description below. This is given purely by way of illustration and should be read in conjunction with the appended drawings, of which:
Figure 1 illustrates an architecture of a mobile network according to a prior art, as already described.
Figure 2-A illustrates a mobile network according to one embodiment of the present invention.
Figure 2-B illustrates the main steps performed by a method for handling handover according to one embodiment of the present invention.
Figure 3 illustrates architecture of a mobile network in detail, wherein one embodiment of the present invention can be applied.
Figure 4 illustrates a home network comprising a plurality of Home evolved NodeBs (HeNB).
Figure 5 illustrates the different type of bearers used according to an example.
Figure 6 illustrates the different protocol stacks for the data plane in LTE architecture.
Figure 7 is a schema to illustrate a mechanism of a local data routing integrated in a Home Node B according to an example.
Figure 8 illustrates usage of downlink tunnels at a routing module according to one embodiment of the present invention.
Figure 9 illustrates usage of uplink tunnels at a routing module according to one embodiment of the present invention.
Figure 10 illustrates a routing module according to an example.

### DESCRIPTION OF PREFERRED EMBODIMENTS

The present invention is described herein below in one exemplary application to a LTE architecture of network. But, it is easy to apply the same principles to other types of network.

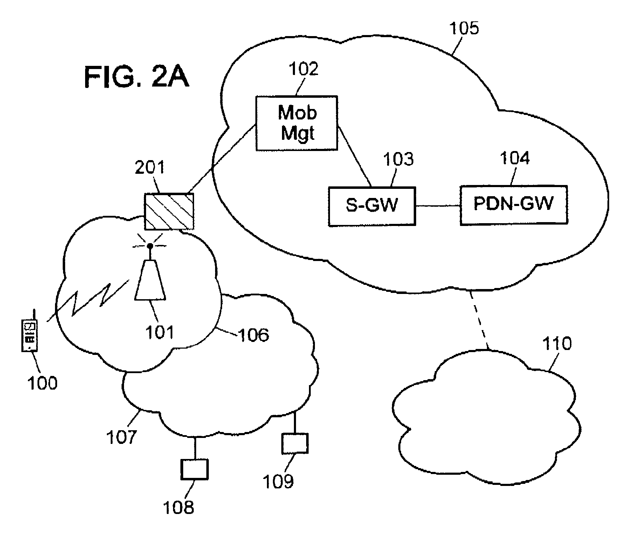

Figure 2-A illustrates a mobile network according to one embodiment of the present invention. This mobile network corresponds to the network illustrated in reference to figure 1. But, in addition, a routing module 201 is included between the home network 106 and the core network 105 in order to carry out the steps of the method according to one embodiment. This routing module 201 is able to received lP packets from the home network 106 on uplink, and from the core network on downlink. In an example, a UE is handled by a source home NodeB. This source home NodeB can decide to trigger a handover for this UE according to some rules. The source home NodeB can then inform a target home NodeB about this decision, and if the target home NodeB accepts this handover, it notifies this acceptation to the routing module of the home network.

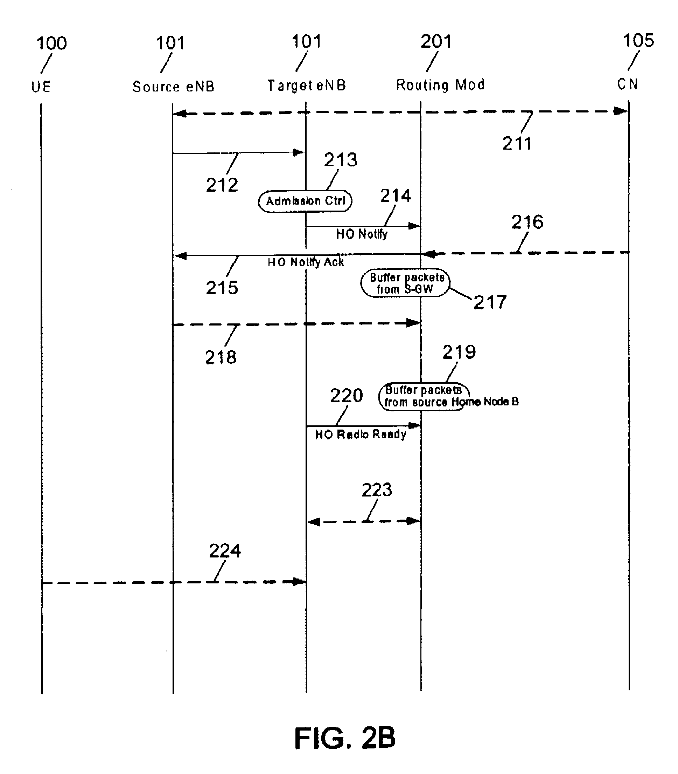

Figure 2-B illustrates the main steps performed by a method handover in a mobile network according to one embodiment of the present invention.

Initially, the UE 100 is in communication through the core network 105 with a data flow 211. This data flow is established from the UE through the source home NodeB 101 and the routing module 201.

The source home NodeB decides a handover for the UE 100. It informs the target home NodeB 101 about this decision by emitting a message 212 towards the target home NodeB. Upon reception of this message 212, the target home NodeB performed an admission control 213 to determine if this handover can be accepted. This step of admission control is not detailed here because it is out of scope. If the target home NodeB accepts this handover, it sends a notify message 214 to the routing module 201 in order to inform this routing module about this change.

Upon reception of this notify message, at a step 217, the routing module begins to store in memory all packets received from the core network 105 and initially directed to the UE 100. Consequently, the data flow 211 is interrupted on downlink at the routing module level. The new downlink data flow 216 is stopped at the routing module which is in charge of memorizing received packets, meaning 'fresh packets'.

Moreover, the routing module triggers an establishment of a forwarding link from the source home NodeB in order to make the source home NodeB to transmit all packets which are not completely transmitted to the UE at the beginning of the handover. For that purpose, the routing module sends a notify answer message 215 to the source home NodeB. This message can provide temporally parameters to establish this forwarding link. When this forwarding link is established, a data flow 218, corresponding to the packets sent by the source home NodeB, is received by the routing module 201. The packets are those directed to the terminal but not yet transmitted completely by the source home NodeB. These packets received are stored at the routing module level at a step 219.

Packets received from the core network and packets received on the forwarding link are stored in memory of the routing module until a radio link is established between the terminal and the target home NodeB. Indeed, when a radio link is established, the routing module can advantageously send these packets to the target home NodeB because the target home NodeB is able to transmit them to the UE.

ln an example, the routing module is informed about the establishment of the radio link between the target home NodeB and the UE by the reception of a radio ready message 220. Upon reception of this message, the routing module 201 sends the packets memorised for the UE through data flows 223 and 224.

The following sections describe in detail an application of the present invention to an existing architecture LTE.

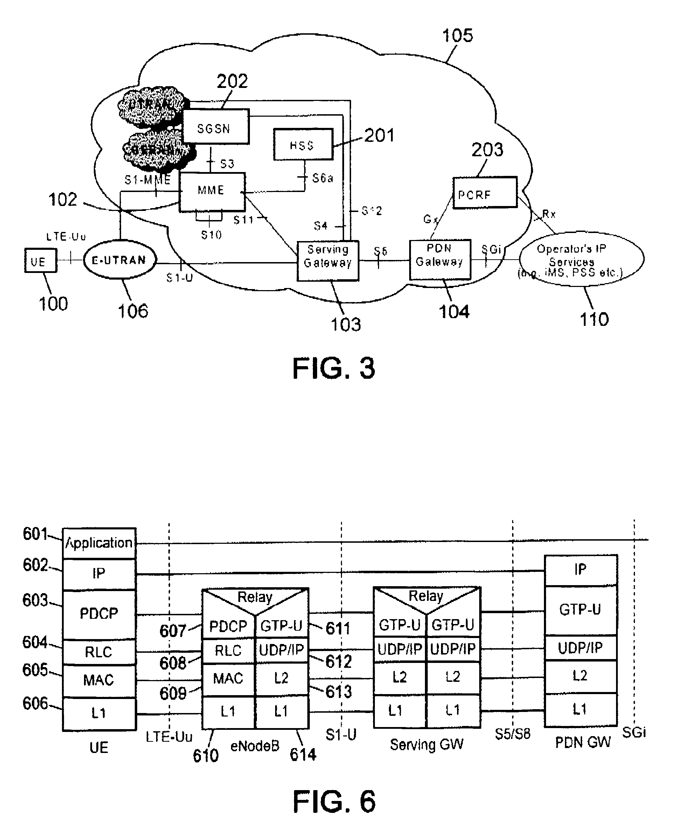

Figure 3 illustrates architecture of a mobile network in detail, wherein one embodiment of the present invention can be applied.

A mobile terminal, or UE for 'User Equipment', can access to the core network 105 via a home network 106. The home network 106 corresponds to E-UTRAN, for 'Evolved Universal Terrestrial Radio Access Network', which is an access part of the network.

This type of architecture is based on a data plane for handling data exchange and on a control plane for handling signalling exchange.

The core network 105 comprises the Mobility Management Entity MME 102, which is a control node in charge of handling mobility and security for mobile terminals (UEs). MME 102 is a contact point for the control plane of the UE. ln an example, the mobility of a UE 100 is handled inside one home network, without changing the MME.

The core network comprises also the Serving Gateway (S-GW) 103, which is the contact point for the data plane of the UE. The Serving Gateway stays the same even if the UE is moving in the access network.

The core network 105 comprises the PDN Gateway 104, which is a contact point between the mobile network, LTE network, and the Internet network 110. Generally, the PDN GW 104 is in charge of handling IP addresses.

The core network can further comprise a Home Subscriber Server 201 (HSS), which is a central node that mainly contains subscription and parameters information for UEs, and a Serving GPRS Support Node (SGSN) 202, which is in charge of handling data exchange with 3G and GSM networks. This core network can comprise too a Policy and Charging Rules Function 203 (PCRF) in charge of charging sessions handled in this network.

According to LTE standard, the interface:
- between the access network (or home network) 106 and the MME 102 is referred as S1-MME interface;
- between the MME 102 and the SGSN 202 is referred as S3;
- between the MME 102 and the Serving GW 103 is referred as S11;
- between the MME 102 and the HSS 201 is referred as S6a;
- between the SGW 103 and the PDN GW 104 is referred as S5;
- between the PDN GW 104 and the Internet network 110 is referred as SGi:
- between the PDN GW 104 and the PCRF 203 is referred as Gx;
- between the PCRF 203 and the internet network 110 is referred as Rx.

According to one embodiment of the present invention, a routing module 201 is adapted to be an interface to S1 bearer interfaces on one side, and to at least one home NodeB of a home network on the other side. In this scheme, NodeB S1 interfaces remain unchanged.

The home network part contains several home NodeBs.

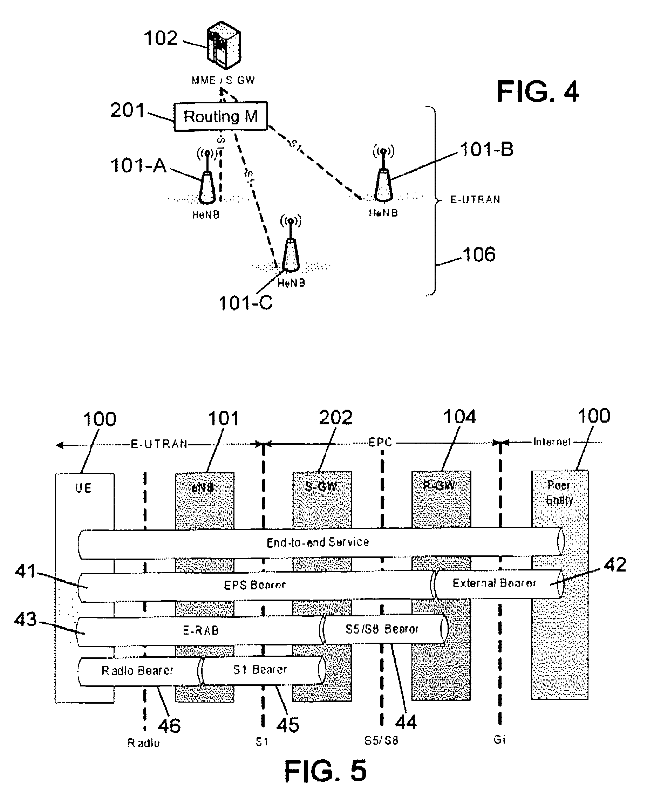

Figure 4 illustrates an E-UTRAN network 106 comprising three home NodeBs 101-A, 101-B and 101-C. The home NodeB 101-A and 101-B are linked to an MME 102.

Figure 5 illustrates in detail different bearers which can be used according to an example. An end-to-end service between two distant mobile terminals is based on an EPS ('Evolved Packet System') bearer 41, between UE 100 and the P-GW 104, and an External Bearer 42, between P-GW 104 and the other mobile terminal UE 100.

The EPS bearer 41 is composed of a bearer E-RAB (for 'Evolved Radio Access Bearer') 43 between the UE 100 and the S GW 202, and of a bearer S5/S8 bearer 44, between the S-GW 202 and the P-GW 104.

More precisely, the E-RAB bearer 43 is composed of a Radio bearer 46 between the UE 100 and the home NodeB 101, and of a S1 bearer 45 between the home NodeB and the S-GW 202.

ln an example, when a UE enters in the mobile network, a default bearer is created. It is also possible to create some additional dedicated bearers at this step.

Figure 6 illustrates the different protocol stacks in LTE architecture.

The protocol stack at UE level comprises:
- an application layer 601;
- an IP layer 602;
- a PDCP layer 603;
- an RLC layer 604;
- a MAC layer 605;
- a L1 layer 606.

The protocol stack at a home NodeB comprises:
- a PDCP layer 607 which is mapped to a GTP-U layer 611 (for GPRS Tunnelling Protocol);
- a RLC layer 608 which is mapped to a UDP/lP layer 612;
- a MAC layer 609 which is mapped to a L2 layer 613;
- a L1 layer 610 which is mapped to a L1 layer 614.

The protocol stack at a Serving GateWay corresponds to the layers 614, 613, 612 and 611. The protocol stack at a PDN GW corresponds to these layers also, with more up layer lP.

On the radio interface between a UE and a home NodeB, applicative lP packets are transported over the PDCP layer and are considered as PDCP-SDU according to UTRAN standard. Data Radio Bearers (or DRB) are mapped over MAC logical channels (one DRB on one DCCH (Dedicated Control Channel) logical channel). DRB are identified in signaling message using a DRB-identity field (or RB-ID). IP source address is filled with the address attached to each DRB that was allocated by the PDN gateways. The (H)eNB is then in charge of mapping traffic of each radio bearer to the corresponding S1 bearer on the core network side.

On the core network side, standard internet protocols are used to transport lP packets. Logical connections, called S1 bearers, are defined between home NodeB and S-GW and there is a bijection between DRB and S1-bearers. S1 bearers are identified using S1-TEIDs (Tunnel End IDentity), one for the home NodeB and a second one for the Evolved Packet Core (EPC). Tunneling is implemented using the GTP-U protocol that relies on UDP/IP. Tunnels are separated thanks to a TEID field in GTP-U header that is filled with the EPC S1-TEID (TEID in the S-GW) in uplink or the home NodeB S1-TEID in downlink. S1 data transport is described in TS36.414 while GTP-U is described in TS29.281. Applicative lP packets are encapsulated within GTP-U packets, being GTP-U payload.

It may be required to protect data traffic into an IPsec tunnel as recommended in TS33.401 (section 12). Concerning the data plane, IP packets conveying GTP-U packets can be embedded into IPSec Encapsulating Security Payload (ESP) packets.

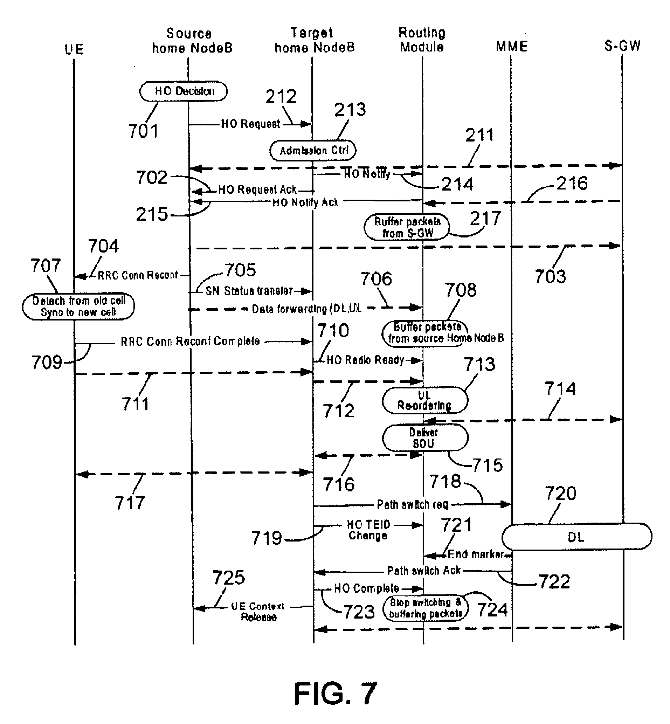

Figure 7 is a schema to illustrate a handover in detail according to an example.

For the following, a hand-over is performed according to an example between two home NodeBs belonging to the same home network, and connected to the core network through a routing module. Consequently, during this handover, the S-GW is not relocated. In these conditions, on the core network side, only S1 bearers are modified, E-RAB and EPS bearer being kept identical as well as UE IP address.

In an example, the routing module does not have access to signaling message exchanged between MME and the source and target home NodeB because of traffic encryption. But, the routing module has access to GTP-U header in the data plane.

When the source home NodeB takes the decision to trigger a handover at step 701, it sends a HO request message 212 (for 'Hand Over') to the target home NodeB.

Upon reception of the message 212, the target home NodeB performs an admission control step 213. According to an example, the target home NodeB can create now one temporary downlink tunnel per S1 bearer associated to the UE in order to make the routing module able to forward to it the future buffered traffic. These temporary downlink tunnels correspond to GTP downlink tunnels and are referenced under DL TEIDs. In an example, the UL TEID can be kept unchanged.

After, the target home NodeB sends to the routing module a HO notify message 214. This message 214 informs the routing module that a handover procedure was initiated and accepted by the target home NodeB.

In an example, this message 214 can contain an identifier of the source home NodeB at the MME S1 level, an identifier of the target home NodeB at the MME S1 level, an identifier of the UE at the MME S1 level and a list of bearers which are impacted by the handover. This list of bearers indicates, on one hand, a list of identifiers of E-RAB corresponding to the S1 bearer impacted by the handover, and a list of temporary allocated DL TEIDs, for the time period of handover.

The target home NodeB sends also a HO Request Acknowledge message 702 to the source home NodeB. After that, the source home NodeB triggers a radio reconfiguration to the UE by sending a RRC Conn Reconfiguration message 704, but continues sending uplink packets to the core network through data flow 713 until terminal detachment is effective. Consequently, the UE performs a detach procedure from the source home NodeB and a synchronisation with the target home NodeB.

Moreover, the source home NodeB transmits to the target home NodeB a list of sequence numbers of unacknowledged packets by sending a SN status transfer message 705.

At the routing module level, upon reception of this message 214, at a step 217, it is decided to stop transmitting downlink traffic for the bearers contained in the HO Notify message 214, and start buffering downlink packets received from these downlink bearers from the core network. All these downlink packets received from the S-GW, which are fresh packets, can append downlink queues of the routing module.

Then, the routing module sends a HO-Notify-Answer message 215, to the source home NodeB. This message 215 can contain the list of impacted bearers, meaning E-RAB lD, and for each of them, a downlink Forward TEID that is used to forward downlink packets from the source home NodeB to routing module according to an example.

Upon reception of this message 215, the source home NodeB may forward downlink unacknowledged packets 706, meaning PDCP-SDUs, to the routing module.

In case of acknowledged mode for transmission, the source home NodeB can also forward out-of-sequence UL PDCP SDUs by using already opened UL tunnels. Those SDUs are queued at the target home NodeB, in order to keep their initial PDCP SN (for sequence number).

When radio re-configuration, which was triggered by the source home NodeB, is done between the target home NodeB and the UE, the target home NodeB receives a RRC Conn Reconfiguration Complete message 709. Upon reception of this message 709, it sends to the routing module a HO-Radio-Ready message 710 in order to inform the routing module that its radio link with the UE is established. After reception of this message 710, the target home NodeB receives new packets from the UE through the radio link 711. The routing module begins then to receive data uplink packets from the target home NodeB in a data flow 712. In case of a transmission in an acknowledged mode, at step 713, the routing module is in charge of reordering the uplink PDCP SDU packets before transmitted them to the S-GW via a data flow 714. Of course, if the transmission is done in a Unacknowledged mode, a reordering step is not useful. Via this data flow 714, the routing module receives downlink PCDP SDU packets to be transmitted to the target home NodeB through a flow data 716. A data communication link is then established between UE and target home NodeB through data flow 717.

The routing module empties its queue by sending buffered packets through data flow 716 and 717 to the UE.

Then, the target home NodeB triggers a path switch by sending a Path Switch Request message 718 to the MME. Here, the objective is to create a new tunnel for downlink packets directly from the S-GW to the target home NodeB in order to avoid to map the downlink flow data sent to the UE on the correct TEID at the routing module level, as it is done during a transition time period of the handover according to the present invention.

Upon reception of the Path Switch Request message 718 at the MME level, a new downlink path is established between MME and S-GW at step 720. At the end of this step 720, the MME sends to the routing module a `Endmarker' message 721 and a Path Switch Ack message 722 to the target home NodeB. Upon reception of this message 722, the target home NodeB sends a HO Complete message 723 to the routing module. This message 723 contains the list of impacted bearers (E-RAB ID) and the list of newly allocated UL TEID. The routing module will send uplink data to the S-GW in a GTP-U tunnel identified by the new uplink TEID. Moreover, the target home NodeB sends a UE context release message 725 to the source home NodeB. At this step, the handover is complete and the UE is handled by the target home NodeB.

During such path switch procedure, the target home NodeB sends a HO-TEID-Change message 723 to the routing module in order to inform the routing module about the change of downlink-TEID for all E-RABs which are impacted by this handover. In an example, the routing module receives packets on the initial downlink TEID and forwards them to the target home NodeB until the end marker message 721 is received in the data flow transported over the old downlink TEID tunnel. The S-GW will send downlink data to the target home NodeB in a GTP-U tunnel identified by the new downlink TEID.

By implementing functionality of packet buffering into Data Routing module, instead of implementing it in the home NodeB, the home NodeB is no more expected to buffer packets received from the core network in the hand over transition time period. By concentrating the buffering in one location inside a home network, meaning in routing module, the memory resource can be advantageously used in a mutual way for the all home NodeBs of the home network. It corresponds to a global memory gain.

Moreover, in the case of a transmission in an acknowledged mode, the re-ordering function can be implemented at the routing module level, allowing to provide simple home NodeBs.

According to one embodiment of the present invention, the management of fresh data traffic can be handled at the routing module level and no more at the source home NodeB. These characteristics allow performing a hand-over procedure faster than before.

Consequently, it is no more requested to manage any direct communication between home NodeBs. This aspect allows simplifying management inside a Home Area Network, notably when the number of home NodeB is high.

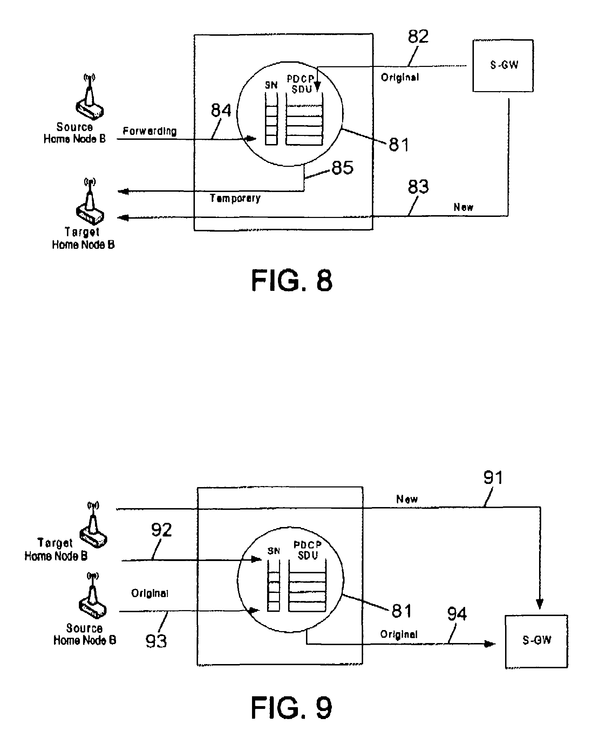

Figure 8 illustrates usage of downlink tunnels at a routing module according to one embodiment of the present invention, in case of acknowledged mode.

At a routing module according to an example, in downlink, a random-access queue 81 is used to buffer and re-order SDU received.

This queue 81 is use to buffer the SDU packets received from the source home NodeB through the forwarding link 84, and from the initial down link 82 from the core network. Packets received from the source home NodeB can correspond to unacknowledged SDUs transported into the S1-bearer identified by the DL-Forwarding TEID. Packets received from the core network (meaning here form the S-GW) can correspond to fresh data, transported into the S1-bearer identified by the initial TEID used between core network and the source home NodeB before the hand-over occurs.

In an example, this queue 81 is emptied upon reception of the HO-Radio-Ready message The SDU stored at the routing module are sent into a temporary link 85 from the routing module to the target home NodeB. This temporary link 85 corresponds to a S1-bearer identified by a temporary DL TEID. This temporary DL TEID is used until the queue 81 is empty. At the routing module, S1 bearers identified by the forwarding DL TEID 84 (for the forwarding link) and temporary DL TEID 85 (for the temporary link) can be released upon reception of the HO-complete message. Resource allocated for the hand-over can also be released and a new DL TEID 83 can be used from the core network towards the target home NodeB.

Figure 9 illustrates usage of uplink tunnels at a routing module according to one embodiment of the present invention, in case of acknowledged mode.

On uplink, packets SDU are transported over a bearer identified by a single UL Initial TEID 93 and 94. Upon reception of a HO-Complete message, the target home NodeB emits UL SDU into a transport bearer identified by a new UL TEID 91. Resource allocated for the hand-over is not released since re-ordering is required.

Such a queue 81 can be for instance implemented using a table keeping reference on already received SDUs, as it is usually done in ARQ reception. Then, packets can be delivered when the packet located at the bottom of the table is received and when the remote device (meaning target HeNB in downlink or S-GW in uplink) is ready to receive them.

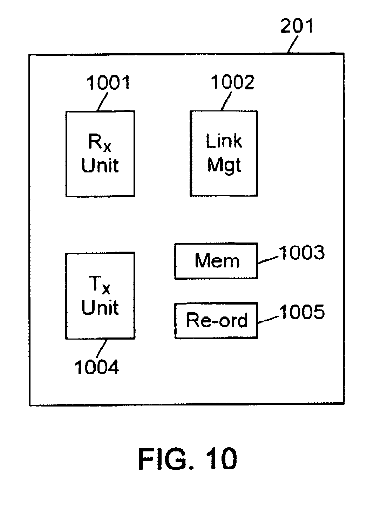

Figure 10 illustrates a routing module according to an example.

A routing module 201 according to one embodiment of the present invention comprises:
- a reception unit 1001 adapted for receiving a notification message 214 notifying that a handover is accepted by the target home NodeB;
- a link management unit 1002 adapted to create a forwarding link 215 from the source home NodeB;
- a memory 1003 adapted to store packets received from the core network and to store at least some packets received on said forwarding link; and
- a transmission unit 1004 adapted to sent packets in memory to the terminal later when a radio link is established between the terminal and the target home NodeB;
wherein packets received on the forwarding link are, on one hand, packets directed to the core network and, on the other hand, packets directed to the terminal but not yet transmitted completely by the source home NodeB.

In one embodiment, the transmission unit 1004 is further adapted to forward packets which are directed to the core network 105 and which are received on the forwarding link 84 to the core network without being storing them in memory.

The memory 1003 can be adapted to store packets directed to the core network and received on the forwarding link, wherein the reception unit is adapted for receiving packets sent by the terminal directed to the core network through the target home NodeB; said routing module further comprising
- a re-ordering unit 1005 adapted for re-ordering packets directed to the core network and received on the forwarding link and packets sent by the terminal directed to the core network through the target home NodeB; and
wherein the transmission unit 1004 is adapted for sending to the core network re-ordered packets.

This routing module 201 can comprise:
- a re-ordering unit 1005 adapted for re-ordering packets received on the forwarding link directed to the terminal and packets received from the core network;
   wherein the transmission unit 1004 is adapted to send to the terminal re-ordered packets.

The routing module 201 can comprise the link management unit 1002 which is adapted for creating a temporary downlink 85. The transmission unit 1004 is adapted for transmitting to the terminal packets received from the core network 105 directed to the terminal;
the reception unit 1001 is adapted for receiving a message indicating a handover complete; and
the routing module further comprising a release unit adapted to release said temporary downlink upon reception of said message.

The home NodeB 101 is located in a home network 106 of a mobile network for handling handover for at least one terminal 100, said home network comprising at least further one more home NodeB and a routing module 201 according to an example. The core network is linked with the home NodeBs through the routing module; said home NodeB comprising said routing module.

## Claims

1. Method for handling handover in a mobile network for at least one terminal (100), the mobile network having a core network (105) and a home network (106) comprising a routing module (201) linked with at least a source home NodeB (101) handling communication for said terminal and a target home NodeB (101);
said core network being linked with said source and target home NodeBs through said routing module;
said method comprising the following steps at said routing module:
- receiving a notification message (214) notifying that a handover is accepted by the target home NodeB;
- storing in memory (217) packets received from the core network;
- creating a forwarding link (215) from the source home NodeB; and
- storing in memory (219) at least some packets received on said forwarding link;
wherein said packets received on the forwarding link are, on one hand, packets directed to the core network and, on the other hand, packets directed to the terminal but not yet transmitted completely by the source home NodeB;
and wherein the method further comprises creating a temporary downlink (85) between the routing module and the target home NodeB and, after the radio link is established between the terminal and the target home NodeB, the following steps:
- transmitting to the terminal on the temporary downlink packets received from the core network directed to the terminal and packets received on the forwarding link directed to the terminal but not yet transmitted completely by the source home NodeB;
- receiving a message indicating a handover complete; and
- releasing said temporary downlink.

2. Method for handling handover according to claim 1, wherein packets directed to the core network and received on the forwarding link are forwarded to the core network without being stored in memory.

3. Method for handling handover according to claim 1 or 2, wherein packets directed to the core network and received on the forwarding link are stored in memory,
said method further comprising the following steps, after the radio link is established between the terminal and the target home NodeB:
- receiving packets sent by the terminal directed to the core network through the target home NodeB;
- re-ordering packets directed to the core network and received on the forwarding link and packets sent by the terminal directed to the core network through the target home NodeB;
- sending to the core network re-ordered packets.

4. Method for handling handover according to any one of the previous claims 1 to 3, further comprising the following steps after the radio link is established between the terminal and the target home NodeB:
- re-ordering packets received on the forwarding link directed to the terminal and packets received from the core network;
- sending to the terminal re-ordered packets.

5. Routing module (201) adapted to handle a handover in a mobile network for at least one terminal (100), the mobile network having a core network (105) and a home network (106) comprising the routing module (201) linked with at least a source home NodeB (101) handling communication for said terminal and a target home NodeB (101);
said core network being linked with said source and target home NodeBs through said routing module;
said routing module comprising :
- a reception unit (1001) adapted for receiving a notification message (214) notifying that a handover is accepted by the target home NodeB;
- a link management unit (1002) adapted to create a forwarding link (215) from the source home NodeB;
- a memory (1003) adapted to store packets received from the core network and to store at least some packets received on said forwarding link; and
- a transmission unit (1004) adapted to sent packets in memory to the terminal later when a radio link is established between the terminal and the target home NodeB;
wherein said packets received on the forwarding link are, on one hand, packets directed to the core network and, on the other hand, packets directed to the terminal but not yet transmitted completely by the source home NodeB;
and wherein the link management unit (1002) is adapted for creating a temporary downlink (85) between the routing module and the target home NodeB;
the transmission unit (1004) is adapted for transmitting to the terminal on the temporary downlink packets received from the core network (105) directed to the terminal and packets received on the forwarding link directed to the terminal but not yet transmitted completely by the source home NodeB;
the reception unit (1001) is adapted for receiving a message indicating a handover complete; and
the routing module further comprising a release unit adapted to release said temporary downlink upon reception of said message.

6. Routing module (201) according to claim 5, the transmission unit (1004) is further adapted to forward packets which are directed to the core network (105) and which are received on the forwarding link (84) to the core network without being storing them in memory.

7. Routing module (201) according to claim 5 or 6, wherein the memory (1003) is adapted to store packets directed to the core network and received on the forwarding link,
wherein the reception unit is adapted for receiving packets sent by the terminal directed to the core network through the target home NodeB;
said routing module further comprising
- a re-ordering unit (1005) adapted for re-ordering packets directed to the core network and received on the forwarding link and packets sent by the terminal directed to the core network through the target home NodeB; and
wherein the transmission unit (1004) is adapted for sending to the core network re-ordered packets.

8. Routing module (201) according to any one of the claims 5 to 7, further comprising:
- a re-ordering unit (1005) adapted for re-ordering packets received on the forwarding link directed to the terminal and packets received from the core network;
wherein the transmission unit (1004) is adapted to send to the terminal re-ordered packets.

9. Mobile network for handling handover for at least one terminal (100), the mobile network having a core network (105) and a home network (106) comprising a routing module (201) according to any one of claims 5 to 8 and linked with at least a source home NodeB (101) handling communication for said terminal and a target home NodeB (101);
said core network being linked with said home NodeBs through said routing module.

## Patentansprüche

1. Verfahren zur Abwicklung einer Übergabe in einem Mobilnetz für mindestens ein Endgerät (100), wobei das Mobilnetz ein Kernnetz (105) und ein Heimatnetz (105) umfassend ein Routing-Modul (201) aufweist, das mit mindestens einem Quell-HeimatknotenB (101), der die Kommunikation für das Endgerät abwickelt, und einem Ziel-HeimatknotenB (101) verknüpft ist;
wobei das Kernnetz mit den Quell- und Ziel-HeimatknotenB durch das Routing-Modul verknüpft ist;
wobei das Verfahren an dem Routing-Modul die folgenden Schritte umfasst:
- Empfangen einer Mitteilungsnachricht (214), die mitteilt, dass eine Übergabe von dem Ziel-HeimatknotenB akzeptiert wird;
- Speichern von Paketen, die von dem Kernnetz empfangen werden, in Speicher (217);
- Erzeugen einer Weiterleitungsverbindungsstrecke (215) von dem Quell-HeimatknotenB; und
- Speichern mindestens einiger Pakete, die auf der Weiterleitungsverbindungsstrecke empfangen werden, in Speicher (219);
wobei die auf der Weiterleitungsverbindungsstrecke empfangenen Pakete einerseits an das Kernnetz gerichtete Pakete sind und andererseits an das Endgerät gerichtete Pakete, die jedoch noch nicht vollständig von dem Quell-HeimatknotenB übertragen sind;
und wobei das Verfahren weiterhin das Erzeugen einer temporären Abwärtsstrecke (85) zwischen dem Routing-Modul und dem Ziel-HeimatknotenB sowie, nachdem die Funkverbindung zwischen dem Endgerät und dem Ziel-HeimatknotenB hergestellt ist, die folgenden Schritte umfasst:
- Übertragen von Paketen, die von dem Kernnetz empfangen werden und an das Endgerät gerichtet sind, sowie von Paketen, die auf der Weiterleitungsverbindungsstrecke empfangen werden und an das Endgerät gerichtet, jedoch noch nicht vollständig von dem Quell-HeimatknotenB übertragen sind, auf der temporären Abwärtsstrecke an das Endgerät;
- Empfangen einer Nachricht, die eine Übergabebeendigung angibt; und
- Freigeben der temporären Abwärtsstrecke.

2. Verfahren zur Abwicklung einer Übergabe nach Anspruch 1, wobei Pakete, die an das Kernnetz gerichtet sind und auf der Weiterleitungsverbindungsstrecke empfangen werden, an das Kernnetz weitergeleitet werden, ohne dass sie im Speicher gespeichert werden.

3. Verfahren zur Abwicklung einer Übergabe nach Anspruch 1 oder 2, wobei Pakete, die an das Kernnetz gerichtet sind und auf der Weiterleitungsverbindungsstrecke empfangen werden, im Speicher gespeichert werden,
wobei das Verfahren weiterhin, nachdem die Funkverbindung zwischen dem Endgerät und dem Ziel-HeimatknotenB hergestellt ist, die folgenden Schritte umfasst:
- Empfangen von Paketen, die von dem Endgerät gesendet werden und an das Kernnetz gerichtet sind, durch den Ziel-HeimatknotenB;
- Umordnen von Paketen, die an das Kernnetz gerichtet sind und auf der Weiterleitungsverbindungsstrecke empfangen werden, sowie von Paketen, die von dem Endgerät gesendet werden und an das Kernnetz gerichtet sind, durch den Ziel-HeimatknotenB;
- Senden umgeordneter Pakete an das Kernnetz.

4. Verfahren zur Abwicklung einer Übergabe nach einem der vorstehenden Ansprüche 1 bis 3, weiterhin umfassend, nachdem die Funkverbindung zwischen dem Endgerät und dem Ziel-HeimatknotenB hergestellt ist, die folgenden Schritte:
- Umordnen von Paketen, die auf der Weiterleitungsverbindungsstrecke empfangen werden und an das Endgerät gerichtet sind, sowie von Paketen, die von dem Kernnetz empfangen werden;
- Senden umgeordneter Pakete an das Endgerät.

5. Routing-Modul (201), ausgebildet zur Abwicklung einer Übergabe in einem Mobilnetz für mindestens ein Endgerät (100), wobei das Mobilnetz ein Kernnetz (105) und ein Heimatnetz (105) umfassend das Routing-Modul (201) aufweist, das mit mindestens einem Quell-HeimatknotenB (101), der die Kommunikation für das Endgerät abwickelt, und einem Ziel-HeimatknotenB (101) verknüpft ist;
wobei das Kernnetz mit den Quell- und Ziel-HeimatknotenB durch das Routing-Modul verknüpft ist;
wobei das Routing-Modul umfasst:
- eine Empfangseinheit (1001), ausbildet zum Empfangen einer Mitteilungsnachricht (214), die mitteilt, dass eine Übergabe von dem Ziel-HeimatknotenB akzeptiert wird;
- eine Verbindungsstreckenmanagementeinheit (1002), ausgebildet zum Erzeugen einer Weiterleitungsverbindungsstrecke (215) von dem Quell-HeimatknotenB;
- einen Speicher (1003), ausgebildet zum Speichern von Paketen, die von dem Kernnetz empfangen werden, sowie zum Speichern mindestens einiger Pakete, die auf der Weiterleitungsverbindungsstrecke empfangen werden; und
- eine Übertragungseinheit (1004), ausgebildet zum Senden von Paketen im Speicher an das Endgerät zu einem späteren Zeitpunkt, wenn eine Funkverbindung zwischen dem Endgerät und dem Ziel-HeimatknotenB hergestellt ist;
wobei die auf der Weiterleitungsverbindungsstrecke empfangenen Pakete einerseits an das Kernnetz gerichtete Pakete sind und andererseits an das Endgerät gerichtete Pakete, die jedoch noch nicht vollständig von dem Quell-HeimatknotenB übertragen sind;
und wobei die Verbindungsstreckenmanagementeinheit (1002) ausgebildet ist zum Erzeugen einer temporären Abwärtsstrecke (85) zwischen dem Routing-Modul und dem Ziel-HeimatknotenB;
die Übertragungseinheit (1004) ausgebildet ist zum Übertragen von Paketen, die von dem Kernnetz empfangen werden und an das Endgerät gerichtet sind, sowie von Paketen, die auf der Weiterleitungsverbindungsstrecke empfangen werden und an das Endgerät gerichtet, jedoch noch nicht vollständig von dem Quell-HeimatknotenB übertragen sind, auf der temporären Abwärtsstrecke an das Endgerät;
die Empfangseinheit (1001) ausgebildet ist zum Empfangen einer Nachricht, die eine Übergabebeendigung angibt; und
das Routing-Modul weiterhin eine Freigabeeinheit umfasst, die ausgebildet ist zum Freigeben der temporären Abwärtsstrecke bei Empfang der Nachricht.

6. Routing-Modul (201) nach Anspruch 5, wobei die Übertragungseinheit (1004) weiterhin ausgebildet ist zum Weiterleiten von Paketen, die an das Kernnetz (105) gerichtet sind und die auf der Weiterleitungsverbindungsstrecke (84) empfangen werden, an das Kernnetz, ohne dass sie im Speicher gespeichert werden.

7. Routing-Modul (201) nach Anspruch 5 oder 6, wobei der Speicher (1003) ausgebildet ist zum Speichern von Paketen, die an das Kernnetz gerichtet sind und auf der Weiterleitungsverbindungsstrecke empfangen werden,
wobei die Empfangseinheit ausgebildet ist zum Empfangen von Paketen, die von dem Endgerät gesendet werden und an das Kernnetz gerichtet sind, durch den Ziel-HeimatknotenB;
wobei das Routing-Modul weiterhin umfasst:
- eine Umordnungseinheit (1005), ausgebildet zum Umordnen von Paketen, die an das Kernnetz gerichtet sind und auf der Weiterleitungsverbindungsstrecke empfangen werden, sowie von Paketen, die von dem Endgerät gesendet werden und an das Kernnetz gerichtet sind, durch den Ziel-HeimatknotenB; und wobei die Übertragungseinheit (1004) ausgebildet ist zum Senden umgeordneter Pakete an das Kernnetz.

8. Routing-Modul (201) nach einem der Ansprüche 5 bis 7, weiterhin umfassend:
eine Umordnungseinheit (1005), ausgebildet zum Umordnen von Paketen, die auf der Weiterleitungsverbindungsstrecke empfangen werden und an das Endgerät gerichtet sind, sowie von Paketen, die von dem Kernnetz empfangen werden;
wobei die Übertragungseinheit (1004) ausgebildet ist zum Senden umgeordneter Pakete an das Endgerät.

9. Mobilnetz zur Abwicklung einer Übergabe für mindestens ein Endgerät (100), wobei das Mobilnetz ein Kernnetz (105) und ein Heimatnetz (105) umfassend ein Routing-Modul (201) nach einem der Ansprüche 5 bis 8 aufweist, das mit mindestens einem Quell-HeimatknotenB (101), der die Kommunikation für das Endgerät abwickelt, und einem Ziel-HeimatknotenB (101) verknüpft ist;
wobei das Kernnetz mit den HeimatknotenB durch das Routing-Modul verknüpft ist.

## Revendications

1. Procédé de traitement de transfert dans un réseau mobile pour au moins un terminal (100), le réseau mobile ayant un réseau central (105) et un réseau d'origine (106) comprenant un module de routage (201) relié avec au moins un noeud B d'origine source (101) traitant la communication pour ledit terminal et un noeud B d'origine cible (101) ;
ledit réseau central étant relié auxdits noeuds B d'origine source et cible à travers ledit module de routage ;
ledit procédé comprenant les étapes suivantes au niveau dudit module de routage :
- la réception d'un message de notification (214) notifiant qu'un transfert est accepté par le noeud B d'origine cible ;
- le stockage en mémoire (217) de paquets reçus en provenance du réseau central ;
- la création d'une liaison de retransmission (215) à partir du noeud B d'origine source ; et
- le stockage en mémoire (219) d'au moins certains paquets reçus sur ladite liaison de retransmission ;
dans lequel lesdits paquets reçus sur la liaison de retransmission sont, d'une part, des paquets destinés au réseau central et, d'autre part, des paquets destinés au terminal mais pas encore transmis complètement par le noeud B d'origine source ;
et dans lequel le procédé comprend en outre la création d'une liaison descendante temporaire (85) entre le module de routage et le noeud B d'origine cible et, après que la liaison radio est établie entre le terminal et le noeud B d'origine cible, les étapes suivantes :
- la transmission au terminal sur la liaison descendante temporaire de paquets reçus en provenance du réseau central destinés au terminal et de paquets reçus sur la liaison de retransmission destinés au terminal mais pas encore transmis complètement par le noeud B d'origine source ;
- la réception d'un message indiquant un transfert terminé; et
- la libération de ladite liaison descendante temporaire.

2. Procédé de traitement de transfert selon la revendication 1, dans lequel des paquets destinés au réseau central et reçus sur la liaison de retransmission sont retransmis au réseau central sans être stockés en mémoire.

3. Procédé de traitement de transfert selon la revendication 1 ou 2, dans lequel des paquets destinés au réseau central et reçus sur la liaison de retransmission sont stockés en mémoire,
ledit procédé comprenant en outre les étapes suivantes, après que la liaison radio est établie entre le terminal et le noeud B d'origine cible :
- la réception de paquets transmis par le terminal destinés au réseau central par l'intermédiaire du noeud B d'origine cible ;
- la réorganisation de paquets destinés au réseau central et reçus sur la liaison de retransmission et de paquets transmis par le terminal destinés au réseau central par l'intermédiaire du noeud B d'origine cible ;
- la transmission au réseau central de paquets réorganisés.

4. Procédé de traitement de transfert selon l'une quelconque des revendications précédentes 1 à 3, comprenant en outre les étapes suivantes, après que la liaison radio est établie entre le terminal et le noeud B d'origine cible :
- la réorganisation de paquets reçus sur la liaison de retransmission destinés au terminal et de paquets reçus en provenance du réseau central ;
- la transmission au terminal de paquets réorganisés.

5. Module de routage (201) adapté pour traiter un transfert dans un réseau mobile pour au moins un terminal (100), le réseau mobile ayant un réseau central (105) et un réseau d'origine (106) comprenant le module de routage (201) relié avec au moins un noeud B d'origine source (101) traitant la communication pour ledit terminal et un noeud B d'origine cible (101) ;
ledit réseau central étant relié auxdits noeuds B d'origine source et cible à travers ledit module de routage ;
ledit module de routage comprenant :
- une unité de réception (1001) adaptée pour recevoir un message de notification (214) notifiant qu'un transfert est accepté par le noeud B d'origine cible ;
- une unité de gestion de liaison (1002) adaptée pour créer une liaison de retransmission (215) à partir du noeud B d'origine source ;
- une mémoire (1003) adaptée pour stocker des paquets reçus en provenance du réseau central et pour stocker au moins certains paquets reçus sur ladite liaison de retransmission ; et
- une unité de transmission (1004) adaptée pour transmettre des paquets en mémoire au terminal ultérieurement quand une liaison radio est établie entre le terminal et le noeud B d'origine cible ;
dans lequel lesdits paquets reçus sur la liaison de retransmission sont, d'une part, des paquets destinés au réseau central et, d'autre part, des paquets destinés au terminal mais pas encore transmis complètement par le noeud B d'origine source ;
et dans lequel l'unité de gestion de liaison (1002) est adaptée pour créer une liaison descendante temporaire (85) entre le module de routage et le noeud B d'origine cible ; l'unité de transmission (1004) est adaptée pour transmettre au terminal sur la liaison descendante temporaire des paquets reçus en provenance du réseau central (105) destinés au terminal et des paquets reçus sur la liaison de retransmission destinés au terminal mais pas encore transmis complètement par le noeud B d'origine source ; l'unité de réception (1001) est adaptée pour recevoir un message indiquant un transfert terminé ; et
le module de routage comprenant en outre une unité de libération adaptée pour libérer ladite liaison descendante temporaire à la réception dudit message.

6. Module de routage (201) selon la revendication 5, l'unité de transmission (1004) est adaptée en outre pour retransmettre des paquets qui sont destinés au réseau central (105) et qui sont reçus sur la liaison de retransmission (84) vers le réseau central sans les stocker en mémoire.

7. Module de routage (201) selon la revendication 5 ou 6, dans lequel la mémoire (1003) est adaptée pour stocker des paquets destinés au réseau central et reçus sur la liaison de retransmission,
dans lequel l'unité de réception est adaptée pour recevoir des paquets transmis par le terminal destinés au réseau central par l'intermédiaire du noeud B d'origine cible ;
ledit module de routage comprenant en outre :
- une unité de réorganisation (1005) adaptée pour réorganiser des paquets destinés au réseau central et reçus sur la liaison de retransmission et des paquets transmis par le terminal destinés au réseau central par l'intermédiaire du noeud B d'origine cible ; et dans lequel l'unité de transmission (1004) est adaptée pour transmettre au réseau central des paquets réorganisés.

8. Module de routage (201) selon l'une quelconque des revendications 5 à 7, comprenant en outre :
- une unité de réorganisation (1005) adaptée pour réorganiser des paquets reçus sur la liaison de retransmission destinés au terminal et de paquets reçus en provenance du réseau central ;
dans lequel l'unité de transmission (1004) est adaptée pour transmettre au terminal des paquets réorganisés.

9. Réseau mobile pour traiter le transfert pour au moins un terminal (100), le réseau mobile ayant un réseau central (105) et un réseau d'origine (106) comprenant un module de routage (201) selon l'une quelconque des revendications 5 à 8 et relié avec au moins un noeud B d'origine source (101) traitant la communication pour ledit terminal et un noeud B d'origine cible (101) ;
ledit réseau central étant relié auxdits noeuds B d'origine à travers ledit module de routage.
